# EUROPEAN PATENT APPLICATION

(11) **EP 4 134 039 A1**
(43) Date of publication of application: **15.02.2023**
(21) Application number: 21190825.6
(22) Date of filing: 11.08.2021
(51) Int. Cl.: A61C 5/60, A61C 5/66, B65D 51/28

(54) **MIXING DEVICE AND METHOD OF MIXING A FIRST COMPONENT WITH A SECOND COMPONENT**

(71) Applicant: medmix Switzerland AG, 9469 Haag (Rheintal) (CH)
(72) Inventor: Thutewohl, Sarah, 9472 Grabs (CH); Koch, Stefan, 8590 Romanshorn (CH)
(74) Representative: Manitz Finsterwald Patent- und Rechtsanwaltspartnerschaft mbB

(57) **Abstract**

A device for mixing a first component with a second component, comprising a housing forming a first chamber for the first component, a second chamber for the second component, a separation element for separating the first chamber and the second chamber, and an activation element for creating a breakthrough through the separation element, wherein the activation element is integrally formed with the housing and wherein a predetermined breaking area is formed between the activation element and the housing.

A method of mixing a first component with a second component, comprising providing a device with a housing forming a first chamber for the first component, a second chamber for the second component, a separation element for separating the first chamber and the second chamber, and an activation element integrally formed with the housing for creating a breakthrough through the separation element, wherein a predetermined breaking area is formed between the activation element and the housing, further comprising moving the activation element relative to the housing to divide the activation element from the housing at the predetermined breaking area, and moving the activation element further to create a breakthrough through the separation element so that the first component and the second component mix.

## Description

The present invention relates to a device for mixing a first component with a second component, comprising a housing forming a first chamber for the first component, a second chamber for the second component, a separation element for separating the first chamber and the second chamber, and an activation element for creating a breakthrough through the separation element.

Such a device may be used for mixing a powder with a liquid substance. For example, such a device may be used for mixing two components so that the mixture can be used for dental applications.

It is an object of the invention to provide a device as described above that is simple to manufacture, easy to use and can only be used a single time.

The object is satisfied by a device having the features of claim 1 and in particular in that the activation element is integrally formed with the housing and in that a predetermined breaking area is formed between the activation element and the housing.

By forming the activation element integrally with the housing, the housing and the activation element can be manufactured as one single part. In order to mix the components, a user can divide the activation element easily from the housing due to the predetermined breaking area, i.e. an area that is meant to serve as an intended breaking point to divide the activation element from the housing.

The housing and the activation element formed integrally with the housing can for example be produced cost effectively and swiftly in an injection molding process.

Embodiments of the device are defined by the dependent claims and described in the following disclosure.

In this connection it should be noted that the term mixing in the context of the present invention is to be understood such that it includes a bringing together of two or more substances to bring about a chemical reaction of the two or more components and/or a physical mixing of two or more components using a mixing device such as a mixer or a simple rod.

According to a preferred aspect, only on breaking the predetermined breaking area, the activation element can create the breakthrough through the separation element. In other words, the device is configured in a way that it is not possible to break the separation element with the activation element if the activation element has not been divided from the housing. Only after dividing the activation element from the housing, the activation element is movable so that it can be used to break the separation element.

The separation element can be made from a foil or any other material, that is capable of separating the first and second chamber in a way, that mixture of the two components is not possible while the separation element is intact. On the other hand, the separation element is configured to be breakable by the activation element.

According to an embodiment, the second chamber is formed by a separate container attachable to the housing. This can simplify the filling of the first chamber with a first substance since a space or passage provided for the separate container may provide an opening for filling the first chamber. After filling the first chamber, the first chamber can be sealed by a separation element connected to the housing. Alternatively, the first chamber can be sealed by the separate container, e.g. by a separation element that forms a front side of the container.

Preferably, the separate container is attachable to the housing by a snap-fit engagement. This allows the user to attach the separate container to the housing without having to use tools and also provides feedback to the user when the separate container is fully attached to the housing.

According to an embodiment, the housing forms a passage for at least partly receiving the separate container. In particular, the housing may form a passage for at least almost fully receiving the separate container. This can be advantageous in providing feedback to the user whether the separate container has been properly attached to the housing. Furthermore, if the passage is configured to fully receive the separate container so that an end section of the separate container is flush with a support surface of the housing, the housing can be placed on a surface with its support surface and a force to create a breakthrough can be applied to the separation element without the risk of the separate container detaching from the housing. Alternatively, the separate container may protrude from the housing when fully attached to the housing.

According to an embodiment, the separate container is axially guided by the passage during attachment of the container. Preferably, an inner circumferential surface of the passage essentially corresponds to an outer circumferential surface of the separate container so that the inner circumferential surface of the passage guides the separate container during attachment.

Preferably, a venting gap is formed between an inner circumferential surface of the housing and an outer circumferential surface of the separate container. The venting gap allows air to exit the passage while the separate container is moved axially in the passage towards its final attachment position. The venting gap preferably is a channel extending in an axial direction from an end region of the passage to a second end region of the passage. The venting gap can be formed in the inner circumferential surface of the housing and/or the outer circumferential surface of the separate container.

According to an embodiment, the second chamber is sealed by the separation element in a non-activated state. The separation element can be connected to the separate container or can be connected to the housing.

According to an embodiment, the predetermined breaking area is breakable by rotating the activation element relative to the housing. "Breakable" means that the connection is breakable by a user by using a usual force or torque used to activate such a device. A usual torque would be between 1.5 and 10 Nm.

According to an embodiment, the predetermined breaking area is breakable by moving the activation element linearly relative to the housing.

Preferably, the predetermined breaking area is configured to be breakable more easily by rotating the activation element relative to the housing than by moving the activation element linearly relative to the housing.

According to an embodiment, the activation element extends in an axial direction and forms a spike at a distal end of the activation element. In particular, the activation element can have a length in the axial direction that is considerably larger than its width. This allows the activation element to pierce the separation element more easily by moving the activation element in the axial direction.

In order to make sure that the activation element is moved in the correct direction, it is preferable that the activation element is axially guided in the housing. In particular, the activation element may form a guiding section having an outer circumferential surface that corresponds with an inner circumferential guiding surface of the housing.

According to an embodiment, the activation element has a circular shaped cross section or a X-shaped cross section. Both versions can have a spike in an end region of the activation element. An activation element with such a cross section is rigid regarding bending so that less material can be used to manufacture the activation element.

According to an embodiment, the activation element is removable from the housing in an activated state. Preferably, removing the activation element from the housing creates an outlet for withdrawing a mixture of the first component and the second component. The outlet is preferably arranged in the top end section of a space defined by the first and second chamber.

According to an embodiment, the housing forms exactly one outlet for withdrawing a mixture of the first component and the second component in an activated state. This allows to withdraw the mixture in a controlled manner.

The invention also relates to a method of mixing a first component with a second component, comprising
providing a device with
a housing forming a first chamber for the first component,
a second chamber for the second component,
a separation element for separating the first chamber and the second chamber, and
an activation element integrally formed with the housing for creating a breakthrough through the separation element,
wherein a predetermined breaking area is formed between the activation element and the housing,
further comprising moving the activation element relative to the housing to divide the activation element from the housing at the predetermined breaking area, and moving the activation element further to create a breakthrough through the separation element so that the first component and the second component mix.

According to an embodiment, the second chamber is formed by a separate container, and the method is further comprising:
attaching the separate container to the housing prior to moving the activation element relative to the housing to divide the activation element from the housing. The attaching of the separate container can be done by the user, i.e. the person who moves the activation element relative to the housing to divide the activation element from the housing at the predetermined breaking area. However, preferably, the separate container is attached to the housing during a manufacturing step, i.e. the separate container is preassembled to the housing.

According to an embodiment, the separate container is attached to the housing by a snap-fit engagement. Alternatively or additionally, the separate container can be attached to the housing by using corresponding threads. Further, the separate container can be attached to the housing by a bayonet connection. Alternatively or additionally, the separate container can be attached to the housing by a snap-on connection. These connection mechanisms have been found to be best suited for connecting the separate container to the housing.

According to an embodiment, moving the activation element relative to the housing to divide the activation element from the housing at the predetermined breaking area comprises rotating the activation element relative to the housing. In other words, dividing the activation element from the housing can be done by applying a torsional force to the predetermined breaking area. In particular, the activation element can be rotated relative to the housing without any essential linear, e.g. axial, movement.

Alternatively or additionally, moving the activation element relative to the housing to divide the activation element from the housing at the predetermined breaking area comprises moving the activation element linearly relative to the housing. Moving the activation element relative to the housing can be done by solely moving the activation element linearly relative to the housing. Alternatively, moving the activation element relative to the housing can be done by a combined rotative and linear movement.

According to an embodiment, moving the activation element further to create a breakthrough through the separation element comprises moving the activation element linearly relative to the housing. This allows simple and reliable mixing of the two components.

According to an embodiment, the first component is a powder and the second component is a liquid or wherein the first component is a liquid and the second component is a powder. In other words, the device can preferably be used for mixing two components, one being a powder and one being a liquid.

According to an embodiment, the first chamber and the second chamber are arranged on top of each other during the mixing of the first component with the second component. As the chambers are situated on top of each another, upon breaking of the separation element, the content of the chamber on the top falls into the chamber below owing to gravitational force and mixes with the content in the lower chamber without need of an active mixing.

According to an embodiment, the method further comprises removing the activation element from the rest of the device after creating the breakthrough through the separation element thereby creating an outlet for withdrawing a mixture of the first component and the second component.

Further embodiments of the invention are described in the following description of the Figures. The invention will be explained in the following in detail by means of embodiments and with reference to the drawing in which is shown:
- Fig. 1A: a front view of a housing of a device according to the invention;
- Fig. 1B: a top view of the housing of Fig. 1A;
- Fig. 1C: a side view of the housing of Fig. 1A;
- Fig. 2A: a sectional view taken along the sectional line A-A of Fig. 1A;
- Fig. 2B: a sectional view taken along the sectional line B-B of Fig. 2A;
- Fig. 2C: a sectional view taken along the sectional line C-C of Fig. 2A;
- Fig. 3A: a front view of the device according to the invention;
- Fig. 3B: a bottom view of the device of Fig. 3A showing a bottom side of a separate container attached to the housing;
- Fig. 3C: a side view of the device of Fig. 3A;
- Fig. 4: a sectional view taken along the sectional line A-A of Fig. 3C.

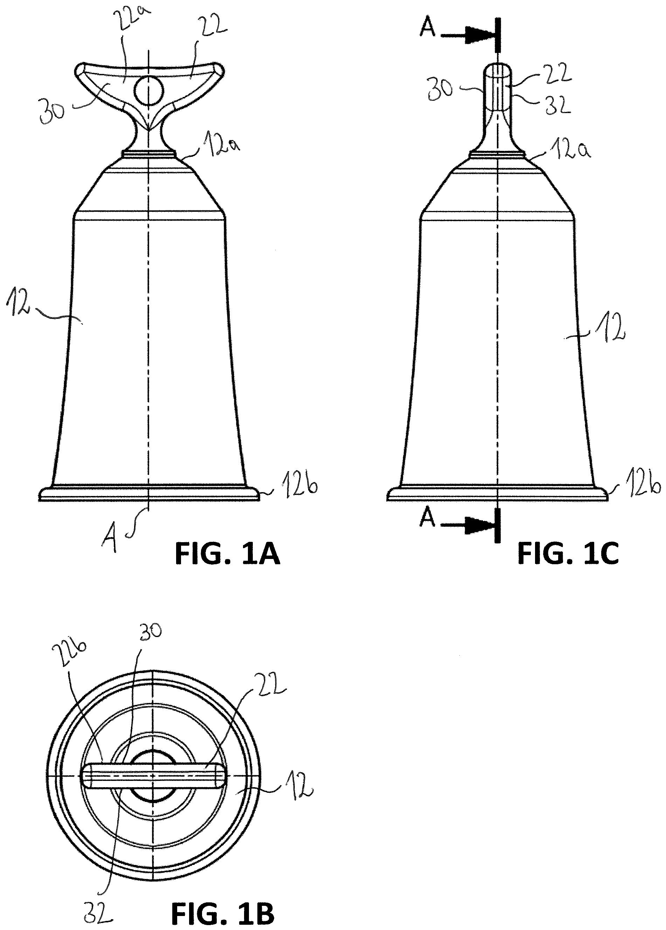

Figs. 1A to 2C depict a housing 12 which is part of a device 10 for mixing two different components, e.g. a powder and a liquid. The housing 12 extends along a longitudinal axis A and has a first end section 12a which is connected to an activation element 22 and a second end section 12b forming a ring-shaped support surface 26 to place the housing 12 onto a horizontal surface in vertical orientation. The ring-shaped support surface 26 has a larger diameter than the first end section 12a in order to improve tipping stability of the housing 12. In other words, the support surface 26 is enlarged in order to avoid tilting of the housing 12 during use. Generally, the housing 12 has a frustoconical shape.

As can be seen from Fig. 1A and 1B, a flat portion 22a of the activation element 22 forms an upper end portion of the device 10. The flat portion 22a has two oppositely disposed surfaces 30, 32 so that a user can grip the flat portion 22a by putting the thump on one of the surfaces 30, 32 and the index finger and the middle finger on the other surface 30, 32 and so that the user can apply a torsional force to the activation element 22.

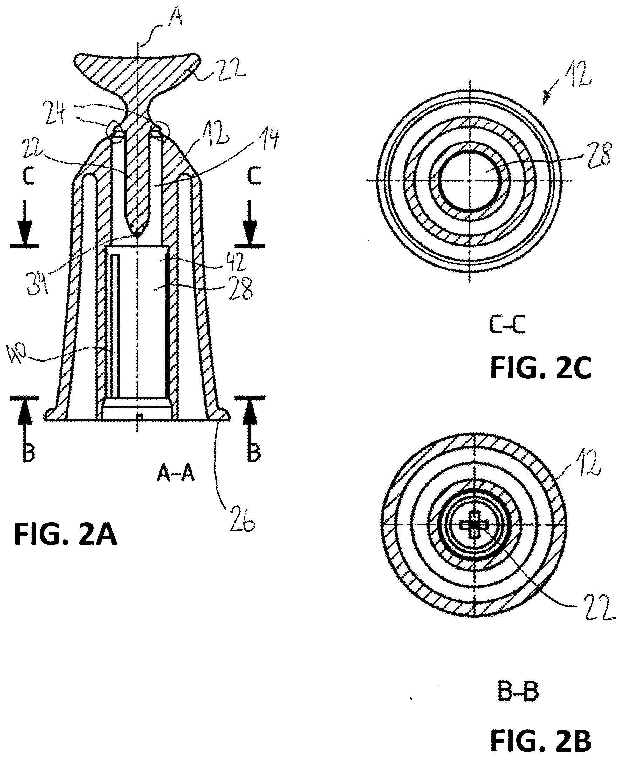

As can be seen from Fig. 2A, which shows a sectional view of the housing 12 and the activation element 22, the housing 12 and the activation element 22 are formed integrally with each other, i.e. they are one part in the shown non-activated state. For example, the housing 12 and the activation element 22 can be formed as one part by injection molding. However, a connection region between the housing 12 and the activation element 22 is weak so that the activation element 22 and the housing 12 can be divided by the user in a controlled manner without having to use tools. In other words, a predefined breaking area 24 is formed between the housing 12 and the activation element 22. The predefined breaking area 24 is ring-shaped and extends circumferentially around the longitudinal axis A of the device 10.

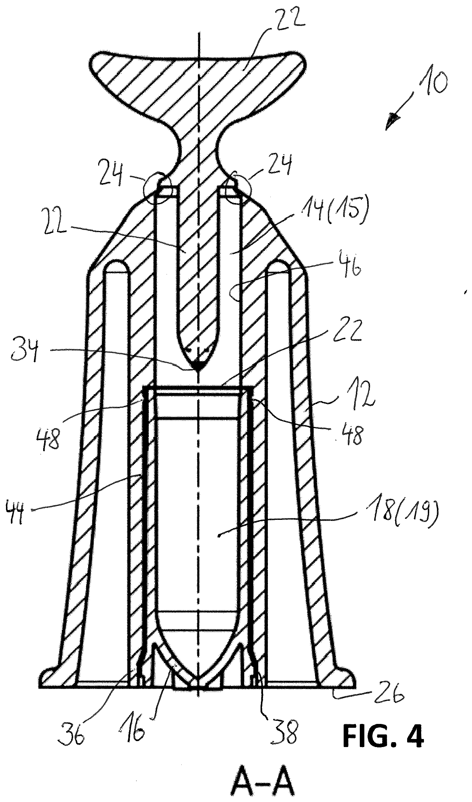

The activation element 22 extends along the longitudinal axis A into a first chamber 14 (see Fig. 2A) for a first component 15. However, the activation element 22, in the non-activated state shown in the figures, does not extend into a passage 28 for receiving a separate container 16 (see Fig. 4). The activation element 22, in the non-activated state, is configured so that it does not touch a separation element 20 (see Fig. 4) separating the first chamber 14 from a second chamber 18 for a second component 19. The activation element 22 forms a spike 34 at its end near the passage 28. The spike 34 is configured to create a breakthrough through the separation element 20. As can be seen from Fig. 2B, the activation element 22 has an x-shaped cross-section. Alternatively, the activation element 22 can have a circular cross-section.

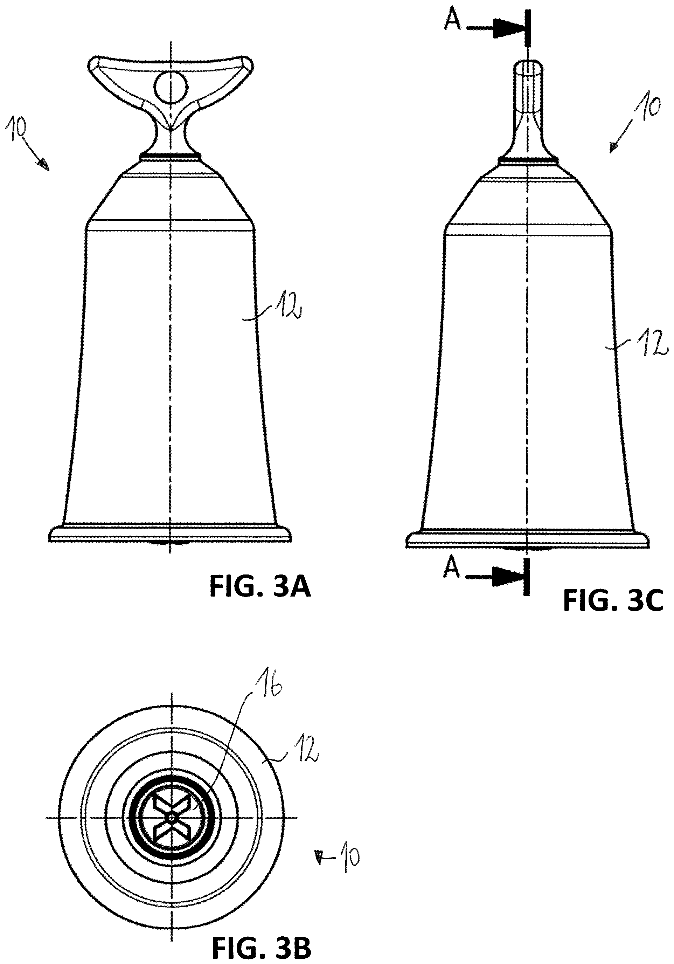

Figs. 3A to 4 depict the housing 12 with the separate container 16 forming the second chamber 18 attached to the housing 12. The separate container 16, as can be best seen in Fig. 4, is put into the passage 28 of the housing 12 along the longitudinal axis A. A venting gap 40 (see Fig. 2A) allows air to exit the passage 28 while the separate container 16 is put into the passage 28. Snap-fit engagement means 36, 38 are formed on the inner circumferential surface 42 (see Fig. 2A) of the passage 28 and the outer circumferential surface 44 (see Fig. 4) of the separate container 16 to attach the separate container 16 to the housing 12. The separate container 16 forms a sealed second chamber 18 for the second component 19. The second chamber 18 is sealed by the separation element 20 in the depicted non-activated state. Furthermore, a sealing lip 48 is provided on the inner circumferential surface 42 of the passage 28 to seal against the separate container 16.

In order to mix the first component 15 and the second component 19, a user divides the activation element 22 from the housing 12 by turning and/or linearly moving the activation element 22 relative to the housing 12. After the activation element 22 is divided from the housing 12, the activation element 22 is linearly movable towards the separation element 20. Thereby, the activation element 22 is linearly guided by an inner guiding surface 46 defining the first chamber 14. The activation element 22 is formed to allow enough linear movement so that the spike 34 creates a breakthrough through the separation element 20. When the breakthrough is created, the first component 15 exits the first chamber 14 and mixes with the second component 19 in the second chamber 18. Then the activation element 22 can be removed from the inside of the housing 12 to create an outlet (not shown). The outlet can be used to retrieve the created mixture.

### List of reference numerals:

- 10: device
- 12: housing
- 14: first chamber
- 15: first component
- 16: separate container
- 18: second chamber
- 19: second component
- 20: separation element
- 22: activation element
- 22a: flat portion
- 24: predetermined breaking area
- 26: support surface
- 28: passage
- 30: surface
- 32: surface
- 34: spike
- 36: engagement means
- 38: engagement means
- 40: venting gap
- 42: inner circumferential surface
- 44: outer circumferential surface
- 46: inner guiding surface
- 48: sealing lip

- A: longitudinal axis

## Claims

1. A device (10) for mixing a first component (15) with a second component (19), comprising
a housing (12) forming a first chamber (14) for the first component (15),
a second chamber (18) for the second component (19),
a separation element (20) for separating the first chamber (14) and the second chamber (18), and
an activation element (22) for creating a breakthrough through the separation element (20),
wherein the activation element (22) is integrally formed with the housing (12) and wherein a predetermined breaking area (24) is formed between the activation element (22) and the housing (12).

2. The device (10) according to claim 1,
wherein, only on breaking the predetermined breaking area (24), the activation element (22) can create the breakthrough through the separation element (20).

3. The device (10) according to claim 1 or claim 2,
wherein the second chamber (18) is formed by a separate container (16) attachable to the housing (12).

4. The device (10) according to claim 3,
wherein the separate container (16) is attachable to the housing (12) by a snap-fit engagement, a threaded engagement, a bayonet connection or a snap-on connection.

5. The device (10) according to claim 3 or 4,
wherein the housing (12) forms a passage (28) for at least partly receiving the separate container (16), preferably
wherein the separate container (16) is axially guided by the passage (28) during attachment of the container (16).

6. The device (10) according to any one of claims 3 to 5,
wherein a venting gap (40) is formed between an inner circumferential surface (42) of the housing (12) and an outer circumferential surface (44) of the separate container (16).

7. The device (10) according to any one of the preceding claims,
wherein the second chamber (18) is sealed by the separation element (20) in a non-activated state.

8. The device (10) according to any one of the preceding claims,
wherein the predetermined breaking area (24) is breakable by rotating the activation element (22) relative to the housing (12), and/or
wherein the predetermined breaking area (24) is breakable by moving the activation element (22) linearly relative to the housing (12).

9. The device (10) according to any one of the preceding claims,
wherein the activation element (22) extends in an axial direction and forms a spike (34) at a distal end of the activation element (22), and/or wherein the activation element (22) is axially guided in the housing (12).

10. The device (10) according to any one of the preceding claims,
wherein the activation element (22) has a circular shaped cross section or a X-shaped cross section.

11. The device (10) according to any one of the preceding claims,
wherein the activation element (22) is removable from the housing (12) in an activated state, and/or
wherein the housing (12) forms exactly one outlet for withdrawing a mixture of the first component (15) and the second component (19) in an activated state.

12. A method of mixing a first component (15) with a second component (19), comprising
providing a device (10) with
a housing (12) forming a first chamber (14) for the first component (15),
a second chamber (18) for the second component (19),
a separation element (20) for separating the first chamber (14) and the second chamber (18), and
an activation element (22) integrally formed with the housing (12) for creating a breakthrough through the separation element (20),
wherein a predetermined breaking area (24) is formed between the activation element (22) and the housing (12),
further comprising moving the activation element (22) relative to the housing (12) to divide the activation element (22) from the housing (12) at the predetermined breaking area (24), and
moving the activation element (22) further to create a breakthrough through the separation element (20) so that the first component (15) and the second component (19) mix.

13. The method according to claim 12,
wherein the second chamber (18) is formed by a separate container (16), and the method is further comprising:
attaching, preferably by a snap-fit engagement, the separate container (16) to the housing (12) prior to moving the activation element (22) relative to the housing (12) to divide the activation element (22) from the housing (12).

14. The method according to any of the method claims,
wherein moving the activation element (22) relative to the housing (12) to divide the activation element (22) from the housing (12) at the predetermined breaking area (24) comprises rotating the activation element (22) relative to the housing (12) and/or
wherein moving the activation element (22) relative to the housing (12) to divide the activation element (22) from the housing (12) at the predetermined breaking area (24) comprises moving the activation element (22) linearly relative to the housing (12), and/or
wherein moving the activation element (22) further to create a breakthrough through the separation element (20) comprises moving the activation element (22) linearly relative to the housing.

15. The method according to any of the method claims, wherein the first component (15) is a powder and the second component (19) is a liquid or
wherein the first component (15) is a liquid and the second component (19) is a powder, and/or
wherein the first chamber (14) and the second chamber (18) are arranged on top of each other during the mixing of the first component (15) with the second component (19), and/or
wherein the method further comprises removing the activation element (22) from the rest of the device (10) after creating the breakthrough through the separation element (20) thereby creating an outlet for withdrawing a mixture of the first component (15) and the second component (19).
